# EUROPEAN PATENT APPLICATION

(11) **EP 4 772 135 A2**
(43) Date of publication of application: **08.07.2026**
(21) Application number: 25206841.6
(22) Date of filing: 06.10.2025
(51) Int. Cl.: A61C 7/10, A61C 7/36

(54) **ORTHODONTIC APPLIANCE AND ORTHODONTIC KIT FOR CORRECTION OF MALOCCLUSION**

(30) Priority: 17.10.2024 EP 24207238
(71) Applicant: formadent ag, 6003 Luzern (CH)
(72) Inventor: Näf, Patrick, 9500 Wil (CH)
(74) Representative: Hepp Wenger Ryffel AG

(57) **Abstract**

The invention relates to an orthodontic appliance (10) for correction of malocclusion in a patient. The appliance (10) comprises a first support (11) configured to anchor to a first jaw, and a second support (12) configured to anchor to a second jaw. The at least one of the first support (11) or the second support (12) of the appliance (10) comprises a sliding surface (20). The appliance further comprises a counter element (30) coupled to, or couplable to, the other of the first support (11) or the second support (12) such that it is positioned opposite the sliding surface (20). The counter element (30) has at least one ramp surface (31) forming a slideway for the sliding surface (20).

## Description

The invention relates to an orthodontic appliance and a kit for correction of malocclusion in a patient according to the independent claims.

Malocclusion in a patient is characterised by a misalignment of teeth and an improper fit of the teeth when an upper and lower jaw when in a closed position.

If left untreated, malocclusion can lead to issues such as dental diseases, abnormal wear of the teeth and discomfort whilst chewing amongst others.

Orthodontic appliances for correcting malocclusion are known in the art.

US 5 879 157 A discloses a mechanism having an outer telescopic element having an inner telescopic element. Each of the outer and inner telescopic element have an eyelet for connecting the mechanism to a teethe brace.

US 6 328 562 B1 relates to a bite correcting appliance having an upper and lower attachment structure and a stretchable, close coil spring connecting the upper and lower attachment structure. The close coil spring exerts a pushing force on the lower jaw of the patient as the patient's jaw closes.

EP 3 383 310 B1 provides a removable device comprising a shell having a number of tooth apertures configured to receive and reposition the teeth. The shell has a repositioning jaw element which extends from the buccal or lingual surface of the shell.

US 10 952 821 B2 discloses an oral appliance having a first and second orthodontic aligner, a temporomandibular joint dysfunction treatment device and a first and second guide each having an angled guide surface.

Known devices for correcting malocclusion such as an overjet, an underbite and crossbite may prove cumbersome to the user causing irritation and discomfort of soft tissue. Furthermore, the small components such as springs may easily trap food or may be difficult for a patient to clean correctly and can thus lead to poor oral hygiene which increases the risk of oral and dental diseases.

Furthermore, some devices require a long period of use with frequent visits to a practitioner for adjustments or maintenance of the devices.

It is an object of the invention to overcome the disadvantages of the prior art, in particular, to provide a more user-friendly appliance which requires a shorter period of use and which provides better treatment. In particular, appliances are needed which require less manipulation or practitioner intervention during the period of use.

This and other objects are achieved by the devices and methods according to the independent claims of the invention.

According to the invention, an orthodontic appliance for correction of malocclusion in a patient is provided. The appliance comprises a first support configured to anchor to a first jaw, and a second support configured to anchor to a second jaw.

At least one of the first support and the second support comprises a sliding surface. The appliance further comprises a counter element which is coupled to, or which is couplable to, the other of the first support or the second support such that it is positioned opposite the sliding surface.

The counter element has at least one ramp surface forming a slideway for the sliding surface.

Preferably, one of the first support or the second support is an upper support and the other is a lower support for anchoring respectively to the upper jaw and the lower jaw of a patient.

For instance, the first support could be an upper support configured to anchor to the upper jaw of a patient and the second support could be a lower support for anchoring to the lower jaw.

Inversely, the second support could be an upper support configured to anchor to the upper jaw of a patient and the first support could be a lower support for anchoring to the lower jaw.

In some embodiments, four supports may be provided such that two upper supports are positioned on the upper jaw and two lower supports are positioned on the lower jaw. The two upper supports may be positioned on opposite sides of the upper jaw with respect to a median plane. Two upper supports may be separate from one another. The two lower supports may be positioned on opposite sides of the lower jaw with respect to a median plane. Two lower supports may be separate from one another.

During the closing motion of a jaw, the sliding surface is configured to slidingly engage the ramp surface of the counter element. The sliding surface may be comprised by either one of the first or second support so long as it is positioned opposite the counter element.

When referring to a sliding surface being opposite the counter element it is intended to be understood that the sliding surface and the counter element are at least substantially in a vertically aligned position to one another and with respect to the transverse plane of the jaw.

For example, in some embodiments the first support is an upper support and comprises the sliding surface. The second support is a lower support and has the counter element coupled to it. Thus, upon use, the upper support and lower support are anchored to the upper jaw and the lower support, and the sliding surface is positioned on the upper jaw at least substantially vertically aligned with the counter element positioned on the lower jaw. In other words, the sliding surface will be positioned superior to the transverse plane in a vertically aligned position to the counter element which will be positioned inferior to the transverse plane.

The inverse is equally possible, wherein the counter element can be positioned superior to the transverse plane and in a vertically aligned position to the sliding surface which would, in this case, be positioned inferior to the transverse plane.

The transverse plane is a horizontal plane which divides the jaw into the upper jaw positioned above the transverse plane and lower jaw positioned below the transverse plane. The transverse plane runs perpendicular to a median plane. The median plane is a vertical plane which runs along the midline of a patient's body and passes through the jaw at the centre and divides it into a left half and a right half.

Having the sliding surface and the counter element opposite one another allows the sliding surface to slidingly engage the ramp surface such that it slides along the profile of the slideway. This causes a traction force and a forward motion of the jaw carrying the counter element.

In some embodiments, at least one of the first support or second support has at least one anchor element which is configured to anchor the support to jaw in such a manner that the occlusal surface of the tooth remains free.

The anchoring element may anchor the support directly or indirectly to the jaw. For example, the anchor element can indirectly anchor the support to the jaw by anchoring to a tooth. Preferably, the anchor element anchors the support to at least the crown of at least one tooth of the jaw in such a manner that the occlusal surface of the tooth remains free.

Optionally, the anchor element may be configured to surround the tooth on at least two sides, preferably at least three sides, even more preferably on four sides whilst leaving the occlusal surface free. In other words, the anchor element may at least partly surround the tooth on its buccal, mesial, lingual and distal surfaces.

Optionally, a plurality of anchor elements may be provided. The plurality of anchor elements may be interconnected with one another.

Leaving the occlusal surface of the tooth free allows the appliance to remain in position and be used continuously (i.e. day and night) throughout the correction process without preventing the patient from being able to chew. Furthermore, this allows the patient to achieve an occluded position of the jaw in a closed position. This continuous use of the appliance could in turn help accelerate the correction process.

Additionally or alternatively, one or more of the first support or second support may be anchored to the jawbone by the anchor element. For instance, a first support could comprise an anchor element such as an implant (e.g. embedded in the jawbone) a temporary anchorage device (e.g. a screw). In this case the support is directly anchored to the jawbone by placement of the anchor element within the jawbone. In an exemplary case, the sliding surface of the support may couple to an implant placed within the jawbone or may comprise a screw end which is to be placed within the jawbone, such that once positioned the sliding surface protrudes in a lateral direction from the jawbone on a buccal side or lingual side of the jaw.

The anchor element is configured to anchor the support to a patient's jaw, preferably to the tooth, until such time that the treatment period has ended and the practitioner removes the appliance.

Optionally, a plurality of anchor elements may be provided to at least one of the first support or second support.

In some embodiments, the anchor element may be configured to anchor the support to a plurality of teeth and a plurality of anchor elements may be provided.

The anchor element may be any structure which is suitable for anchoring the support to a tooth. The anchor element may include one or more of a frame-like element; a dental bracket; a wire-like element or a band element.

The anchor element may have a semi-annular shape or an annular shape when the anchor element surrounds two or more surfaces of the tooth.

The anchor element allows the appliance to be securely retained in the intended position for the correction of the malocclusion. Furthermore, the anchor element helps increase the stability of the appliance and can allow for a more efficient functioning of the appliance (and therefore a more effective correction of the misalignment) resulting in a reduced treatment period (i.e. the amount of time the patient needs to wear the appliance to correct the malocclusion) for a patient.

In some embodiments, the anchor element includes at least one bracket or frame-like element configured to anchor the support to the at least one tooth.

The frame-like element is understood to be a structure which at least partly has, or conforms to, the shape the tooth. Preferably, the frame like element conforms to the external contour of the tooth.

When provided as a bracket the anchor element may further include a wire. The bracket may be positioned on a first surface of the tooth and the wire may connect the bracket to a further anchor element (e.g. another bracket).

In some embodiments the appliance further comprises a second counter element coupled to one of the first support or the second support such that the second counter element is opposite a second sliding surface of the first support or of the second support with respect to a transverse plane.

Thus, the appliance may comprise at least two counter elements on the same support. The at least two counter elements may be at least substantially symmetrical to one another. Alternatively, the at least two counter elements may be asymmetrical to one another. Additionally or alternatively, the at least two counter elements may be at least substantially the same size compared to one another or the at least two counter elements may differ in size compared to one another.

A difference in size may relate to any one or more: a different thickness of the counter elements; a different height of the counter elements; a different angle of respective ramp surfaces of the counter elements.

For instance, the first support may comprise two sliding surfaces and the second support can comprise two counter elements. The first sliding surface and second sliding surface of the first support may be opposite one another with respect to a median plane. The first counter element and second counter element of the second support may be opposite one another with respect to a median plane. In this configuration, the first sliding surface of the first support and the first counter element of the second support are at least substantially vertically aligned with one another on a first side lateral to the midsagittal plane. The second sliding surface of the first support and the second counter element of the second support are at least substantially vertically aligned with one another on a second side lateral to the midsagittal plane. In other words, the first sliding surface and the first counter element are positioned opposite the second sliding surface and the second counter element with respect to a median plane.

In an alternative exemplary embodiment, the first support may comprise a first sliding surface and a first counter element and the second support may comprise the second sliding surface and a second counter element. The sliding surface and counter element of the first support are opposite one another with respect to a median plane. The sliding surface and counter element of the second support are opposite one another with respect to a median plane. In this configuration, the sliding surface of the first support and the counter element of the second support are substantially vertically aligned with one another on a first side of the median plane. And the counter element of the first support and the sliding surface of the second support are substantially aligned with one another on the second side of the median plane. The first counter element and the second counter element would have ramp surfaces oriented in opposite directions compared to one another. For instance, the first counter element would have a ramp surface oriented toward the back (posterior) of the jaw and the second counter element would have a ramp surface oriented toward the front (anterior) of the jaw.

In some embodiments, the counter element is preferably a lug. The counter element has a thickness between 0.1 mm to 10 mm. Preferably, the counter element has a thickness between 0.5 mm to 1 mm.

The thickness of the counter element may improve patient comfort during the use of the appliance and help reduce the risk of injury to the patient due to the appliance such as irritation to soft tissue.

The lug forms a projection extending substantially vertically with respect to the median plane when coupled a first or second support. The lug may have any geometrical shape with at least one ramp surface forming the slideway for the sliding surface. The lug may have a tapered profile and may for example be pyramidal; conical; tetrahedral; cuboidal; aliform .....

The lug may be formed a one piece or alternatively may be formed by a plurality of pieces.

The sliding surface may be part of any element suitable for sliding along the slideway formed by the ramp surface of a counter element (e.g. lug). The sliding surface is preferably formed by a stud.

The stud forms a projection extending substantially laterally with respect to a median plane when comprised by the first or second support.

The stud is generally as small in size as possible. The stud may have a thickness comprised between 0.1 mm to 10 mm. Preferably, the stud may have a thickness comprised between 0.1 mm to 5 mm. More preferably, the stud has a thickness between 0.1 mm to 3 mm.

The stud may have a length comprised between 0.1 mm to 10 mm. Preferably, the stud may have a length comprised between 0.1 mm to 5 mm. More preferably, the stud has a length between 0.1 mm to 3 mm.

The general shape and size of the lug and/or of the stud may improve patient comfort as well as being easier for the patient to clean and therefore may help reduce the risk of diseases or issues that can occur when a dental device is not properly cleaned.

In some embodiments, at least one of the first support or the second support comprises at least one platform. The platform is configured to couple to the counter element, preferably a lug, via a decouplable connection.

Generally speaking, the platform extends laterally from the support. When anchored to a jaw, the at least one platform comprised by the first support, or second support, is positioned on a buccal side of the jaw.

Alternatively, the at least one platform comprised by the first support, or second support, can be positioned on a lingual side of the jaw. In this case, the counter element would also be positioned on a lingual side of the jaw and slidingly engage a sliding surface also positioned on a lingual side of the jaw.

In some embodiments the decouplable connection is formed by two cooperating parts which interact such that the counter element and the platform are detachably secured to each other.

One of the two parts of the detachable connection is comprised by the platform and the other of part is comprised by the counter element.

Generally speaking, a correction process for malocclusion may contain a plurality of phases as the alignment of the jaws gradually adjusts. Each of these phases may require a different counter element depending on patient specifics and the patient's progress using the appliance.

The decouplable connection provides for an easily adaptable appliance which may be coupled to a first counter element during a first period of the correction process which can then be replace by a second counter element during a second phase of a correction treatment.

In some embodiments the decouplable connection may be any one or more of a snap-fit connection, or a magnetic connection.

In some embodiments the platform may be configured, or may be further configured, to couple to the counter element via an interlocking connection.

The platform forms a guide surface which is configured to take the load of lateral forces which are transverse to a vertical direction.

The interlocking connection is formed by two parts designed to fit together through complementary shapes. One of the two parts is comprised by the platform and the other part of the interlocking connection is comprised by the counter element. Preferably, the interlocking connection is detachable to allow for the contact surface to be changed when necessary.

The interlocking connection may be any one or more of a swallowtail joint; a tongue and groove joint; a sliding mortise and tenon joint; a box joint; a T-slot joint or a screw joint.

Preferably, the two parts of the interlocking connection may be configured to interlock by sliding a first part into a cut-away of the second part.

In other words, a first part of the interlocking connection may have a protrusion, and the second part may comprise a recess having a complementary shape of the protrusion of the first part. The first part may interlock with the second part by insertion of the protrusion of the first part into the recess of the second part.

The interlocking connection may help counteract lateral forces applied to the counter element during the use of the jaw (e.g. when chewing) and thus improve the stability of the coupling of the counter element and improve the overall reliability of the appliance. The lateral forces experienced in a jaw is the horizontal forces exerted on structures of the jaw (e.g. teeth, jawbone) during use of the jaw, particularly during chewing, grinding or clenching motions. The lateral forces may be exerted in an anterior-posterior direction or a lingual-buccal direction. The lateral forces are different from the vertical forces exerted on structures of the jaw and which are substantially aligned with the motion of opening and closing the jaw.

In some embodiments, the counter element, preferably the lug has a top section having a top section thickness and a base section having a base section thickness. The base section is configured to couple to the at least one platform. The top section thickness is different to the base section thickness. Preferably, the thickness of the top section is smaller than the thickness of the base section.

In other words, the base section of the counter element is thicker in a buccal-lingual direction than the top section of the counter element.

Providing a thicker base section compared to the thickness of the top section may improve the stability and stress resistance of the counter element coupled to the platform.

The size of the lug is generally individual to each patient as it is chosen according to the shape or size a patient's tooth or teeth.

The top section of the lug can be at least partly rounded to avoid tissue damage to the patient.

The thickness of the base section is preferably comprised between 0.1 mm to 10 mm. Further preferably, the thickness of the base section is comprised between 0.1 mm to 5 mm. Even more preferably, the thickness of the base section is preferably comprised between 0.1 mm to 3 mm.

The thickness of the top section is preferably comprised between 0.1 mm to 10 mm. Further preferably, the thickness of the top section is comprised between 0.1 mm to 5 mm. More preferably, the thickness of the top section is preferably comprised between 0.1 mm to 3 mm. Even more preferably, the thickness of the top section is preferably comprised between 0.1 mm to 1 mm.

In some embodiments, the at least one ramp surface of the at least one counter element (e.g. lug) is curved. Alternatively, the at least one ramp surface of the at least one counter element is straight.

Alternatively, the counter element may have two ramp surfaces that are straight. Further alternatively, the counter element may have two ramp surfaces that are curved.

The curved ramp may facilitate a dynamic correction and training of the jaw and muscles of the jaw so that the alignment.

At least one curved ramp surface of the at least one counter element may be concave. Additionally or alternatively, at least one ramp surface of the at least one counter element may be convex.

In some embodiments the counter element may have at least two ramp surfaces. The at least two ramp surfaces may be any combination of a concave ramp surface, a convex ramp surface or a straight ramp surface.

The counter element (e.g. the lug), in particular the ramp surface of the counter element may be chosen or designed based on a patient's temporomandibular fossa.

This provides for a more patient specific appliance and may help improve the reliability of the appliance and improve the chances of the correction process being successful in that patient.

In some embodiments, the at least one straight ramp surface of the at least one counter element has an angle of 25° to 110° with respect to the platform. Preferably, the at least one straight ramp surface of the at least one counter element has an angle between 45° to 90° with respect to the platform.

For example, throughout a correction process the counter surfaces of a patient may be adapted according to the phase of the correction process and such that the ramps surface varies over the course of the process from 25° angle to a 110° angle with respect to the platform. The angle of the ramp surface may differ by increments of 0.5° to 8° from one phase to the subsequent phase of the process. Preferably, the angle of the ramp surface differs by increments of 2° to 5° from one phase to the subsequent phase of the process.

In some embodiments, the one ramp surface may be formed by a substrate which is detachably mounted on the counter element. Additionally or alternatively, the sliding surface can be detachably mounted on the support.

Thus, one or more of the ramp surface of the at least one counter element or the at least one sliding surface is detachable.

As mentioned above, the correction process may contain a plurality of phases. Each phase may require a different ramp surface depending on patient specifics and the patient's progress using the appliance. Providing the counter element with a detachable ramp surface may provide for an easier adaptation of the appliance according to requirements of different phases of the correction process without having to remove the entire counter element.

In some embodiments, at least one of the first support or the second support has a transverse bar for correction of a cross-bite in a patient. When provided, the transverse bar is preferably an adjustable transverse bar.

The transverse bar is configured to exert an outward pressure on the jaw to which the support is anchored. The outward pressure gradually widens the space between two opposite sides of a same jaw. For example, when the support is placed on the upper jaw, the transverse bar applies lateral outward pressure to both sides of the upper jaw relative to the median plane, expanding the jaw symmetrically.

The transverse bar may include any one or more of a rapid palatal expander, a spring-loaded expander, a mini-screw assisted rapid palatal expander.

Providing the appliance with at least one transvers bar further allows the correction of a crossbite simultaneously to the correction of other malocclusion issues such as an underbite or an overjet. This is beneficial for the patient as substantially all issues can be dealt with at the same time, thus reducing the need for further appliances or interventions to correct untreated issues.

In some embodiments, the platform has a width between 0.5 mm to 15mm. Preferably, the platform has a width between 1 mm to 12 mm. More preferably, the platform can have a width between 1 mm to 5 mm.

For example, the platform can have a total transversal width between 1 mm to 12 mm. This means that the platform can have a width of 0.5 mm to 6 mm on either side of a transversal axe which divides the platform in two portions.

When at least one of the first or second support comprises a transverse bar for correction of a crossbite, the at least one platform of the appliance is wider than in an appliance not having the transvers bar.

During the correction of a crossbite, the space between the left and right side of a jaw are gradually widened. This leads to a change in the vertical alignment between teeth of the upper jaw and teeth of the bottom jaw. In the case of this appliance, this also creates a gradual change in the alignment of the sliding surface and the counter element.

Providing a wider platform as compared to an appliance which does not address crossbite misalignment, allows for the provision of wider counter element as the left and right sides of the jaw are pushed away from one another. The sliding surface can then continue to slidingly engage with the wider counter element as the space between the two sides of the jaw is expanded.

For example, the at least one platform provided in a device for correction of a underbite preferably has a width of 0.1 mm to 8 mm. More preferably the platform in a device for correction of a underbite has a width of 1 mm to 5 mm.

The at least one platform provided in an appliance for correction of a crossbite (i.e. having the transverse bar) preferably has a width of 0.5 mm to 15 mm. More preferably the platform in an appliance for correction of a crossbite has a width of 1 mm to 12mm.

In some embodiment, at least one of the parts of the appliance is produced by additive manufacturing.

Preferably at least the lug is produced by additive manufacturing.

Producing the part or parts of the appliance by additive manufacturing allows the part being produced to be designed based on patient characteristics (e.g. the patient's temporomandibular fossa, age, bone quality, ...) such that the part or parts are patient specific.

This provides for an appliance which it "tailor made" to fit the patient's anatomical structures and therefore may allow for a more successful correction process.

Another advantage of producing the part or parts of the appliance using additive manufacturing relate to cost and time efficiency of the producing the part(s) in said manner compared or conventional methods of milling or injection moulding.

Preferably, any or all parts of the appliance are made from a biocompatible metal or a metal alloy.

In a further aspect, the invention relates to an orthodontic kit comprising the orthodontic appliance according to the first aspect the present invention. The orthodontic kit further comprises a plurality of counter elements. At least two counter elements out of the plurality of counter elements are different in size compared to each other.

In a preferred embodiment, the kit is provided in which at least three counter elements out of the plurality of lugs have a different size with respect to each of the other two lugs.

The difference in size between the at least two counter elements, preferably between the at least three counter elements, may relate to any one or more of:
- a different base section thickness of the counter elements;
- a different top section thickness of the counter elements;
- a different height of the counter elements;
- a different curvature angle of respective curved ramp surfaces of the lugs; or
- a different incline angle of the respective straight ramp surfaces of the lugs.

Additionally or alternatively, in some embodiments, the kit may comprise, or may further comprise, a plurality of ramp surfaces configured to couple to a lug of the appliance. At least two ramp surfaces out of the plurality of ramp surfaces are different in size compared to each other.

In a preferred embodiment, at least three ramp surfaces out of the plurality of ramp surfaces have a different size with respect to each of the other two ramp surfaces.

The difference in size between the at least two ramp surfaces, preferably between the at least three ramp surfaces, may relate to any one or more of:
- a difference in thickness of the ramp surfaces;
- a difference in height of the ramp surfaces;
- a difference in curvature angle of at least two curved ramp surfaces; or
- a difference in incline angle of at least two straight ramp surfaces.

Providing the different sized counter elements or ramp surfaces in the kit allows for an easily adaptable device in which the lug can be readily exchanged according to the phase of the process.

For instance, the kit may be provided with a number of lugs corresponding to the number of phases in the correction process. Thus, the practitioner will already have the lugs for each phase to hand. Furthermore, this may also allow the appliance to be easily adapted to different patients..

In the case of parts custom made for the patient, providing the kit as a whole may reduce the time required for the practitioner to install as the practitioner the appliance as well helps improve the overall comfort of the patient thought out the entire correction process.

Providing a kit with a variety of lugs of different sizes, which are for example not custom made to fit the patient's anatomy, may also reduce the duration of the installation by the practitioner as the practitioner can try different versions of the lugs during the same appointment to determine which lug fits best without having to order or manufacture a custom piece which would then extend the treatment period so as to accommodate for the delay to receive the piece.
- Fig. 1: a side view of a first embodiment of the appliance.
- Fig. 2: a schematic side view of a second embodiment of the appliance shown without a lug.
- Fig. 3: a top view of an embodiment of a first support of the appliance.
- Fig. 4a: a top view of an embodiment of a second support of the appliance.
- Fig. 4b: a side view of the embodiment of Fig. 4a.
- Fig. 5a: a side view of an embodiment of a counter element of the appliance.
- Fig. 5b: a bottom view of the embodiment of Fig. 5a.
- Fig. 6: a side view of an embodiment of a platform of the appliance.
- Fig. 7: a side view of an embodiment of a platform coupled to a counter element of the appliance.
- Fig. 8: a side view of an embodiment of a platform coupled to a counter element of the appliance.
- Fig. 9: A schematic representation of a plurality of lugs.

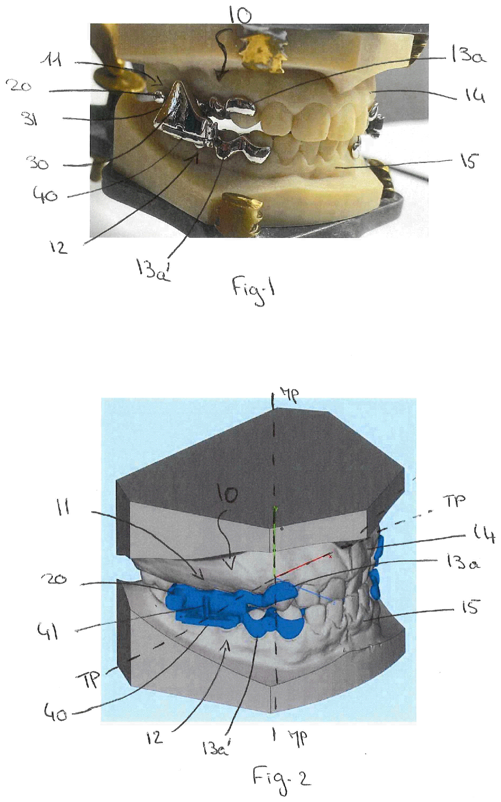

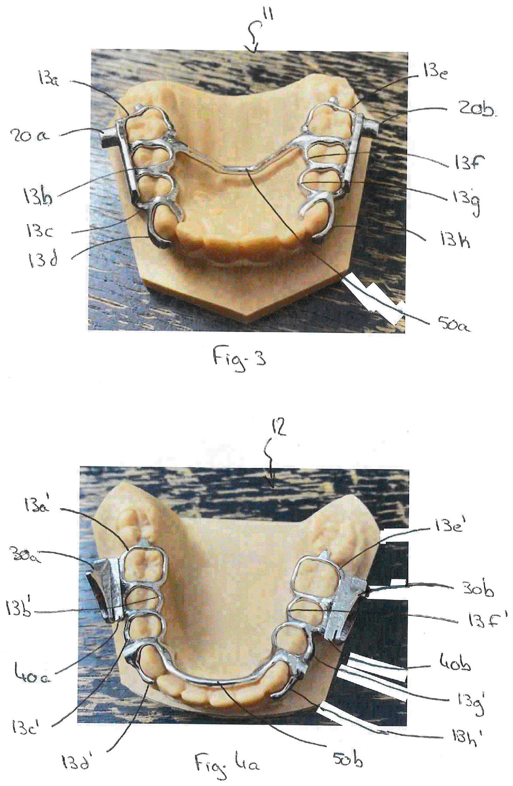

Fig. 1 shows an orthodontic appliance 10 which is suitable for correcting of malocclusion, such as an underbite, in a patient. The appliance 10 has a first support 11 shown as an upper jaw support and which is anchored to the upper jaw 14. The upper support 11 comprises an anchoring element 13a. The anchoring element 13a anchors the upper support to a tooth of the upper jaw. The anchoring element 13a is shaped such that when the support is positioned on a jaw, the anchoring element 13a is in contact with the buccal side of the tooth to which it anchors (see also Fig. 3). A practitioner may use a bonding agent (not shown) to bond the anchoring element 13a to the buccal side of the tooth. The upper support has a sliding surface 20 or a stud which projects laterally outwards from the support on the buccal side of the jaw (i.e. which is positioned between the jaw and the cheek).

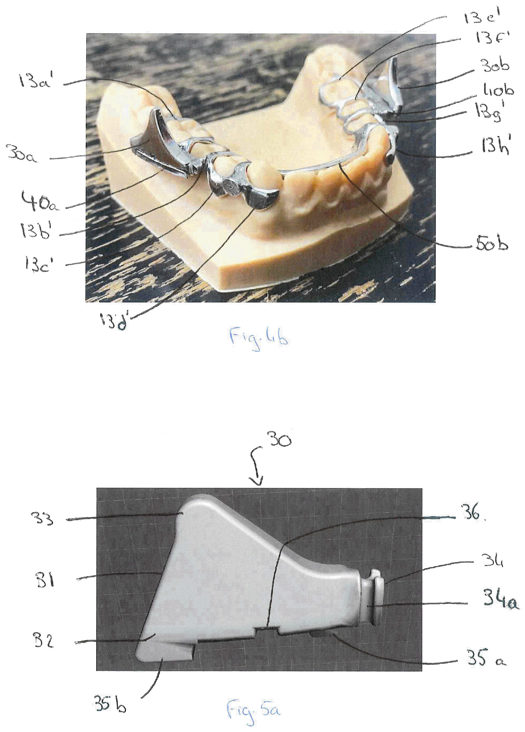

The appliance shown in Fig. 1, has a second support 12, here provided as a lower support anchored to a lower jaw 15. The lower support 12 comprises an anchoring element 13a'. The anchoring element 13a' anchors the lower support to a tooth of the lower jaw. The anchoring element 13a' is shaped such that when the support is positioned on a jaw, the anchoring element 13a' is in contact with the buccal side of the tooth to which it anchors (see also Fig. 4). Here also, a practitioner may use a bonding agent (not shown) to bond the anchoring element 13a' to the buccal side of the tooth.

The lower support 12 further comprises a platform 40 on its buccal side. The platform 40 is coupled to a lug 30. The lug 30 is shown as a lug 30. The lug 30 has a ramp surface 31. The ramp surface 31 forms a slideway for the stud 20 of the upper support and on which the stud translates during motion of the jaw. As can be seen in Fig. 1 the jaw of the model is in a closed position and the stud can be seen nearer to a base section 32 (see Fig. 5a-b) of the lug 30. When the jaw is in an open position (not shown), the stud is positioned at, or near, a top section 33 (see Fig. 5a-b) of the lug 30. Upon the closing motion of the jaw, the stud 20 slidingly engages and translates along the ramp surface 31 of the lug 30. The sliding engagement of the stud 20 and the lug 30 exerts a force in an anterior direction on the upper jaw which with time brings the upper jaw into alignment with the lower jaw such as to correct the underbite.

The stud 20 of the upper support 11 and the lug 30 of lower support are opposite one another with respect to a transvers plane TP (see Fig. 2) of the jaw.

It is possible that the device could generate an anterior-posterior force respectively on the upper jaw and lower jaw. Thus, the upper jaw would be gradually moved forward, and the lower jaw would be gradually moved backwards during the correction process.

Fig. 2 shows a similar appliance as the one shown in Fig. 1, without a mounted lug. Thus, the same reference numerals will not be redescribed for clarity. Here, the platform of lower support 12 is not coupled to a lug 30. The platform 40 can be seen to have a decouplable connection part 41. Said decouplable connection part 41 a first part of a snap-fit connection. The second complementary part of the snap-fit connection is integrated within the lug 30 such that the lug 30 and the platform 40 can securely couple to one another. The stud 20 of the upper support 11 and the platform of lower support can be seen opposite one another with respect to the transvers plane TP of the jaw.

Fig. 3 shows a top view of an embodiment of a first support 11. The first support 11 comprises a first stud 20a and a second stud 20b. The first stud 20a and second stud 20b are positioned opposite one another with respect to the median plane MP of the jaw (see Fig. 2). The support 11 comprises a reinforcement 50a which spans from one side of the jaw to the other side of the jaw (i.e. across the median plan) and thus connects two parts of the first support. The two parts of the first support are positioned on opposite sides to one another with respect to the median plane MP. The first support 11 comprises a plurality of anchoring elements 13a; 13b; 13c; 13b; 13e; 13f; 13g; 13h. The anchoring elements 13a, 13b, 13c, 13e, 13f, 13g are formed as frame-like elements that surround the respective tooth on four sides (i.e. the buccal, mesial, lingual and distal surfaces) whilst leaving the occlusal surface of the tooth free.

The anchoring elements 13d and 13h are semi-annular structures which surround the tooth to which they respectively anchor on three surfaces (here the buccal, lingual and distal surface are at least substantially surrounded by the anchoring elements 13b and 13h). The mesial and occlusal surfaces of the respective teeth are left free.

Fig. 4a shows a top view and Fig. 4b shows a side view of an embodiment of a second support 12 which comprises a first lug 30a and a second lug 30b each coupled to a respective platform 40a, 40b. The support 12 comprises a reinforcement 50b which connects one side of the jaw to the other side of the jaw (i.e. across the median plane) and thus connects two parts of the second support 12. The two parts of the second support are positioned on opposite sides to one another with respect to a median plane MP. The second support 12 comprises a plurality of anchoring elements 13a'; 13b'; 13c'; 13b'; 13e'; 13f'; 13g'; 13h'. The anchoring elements 13a', 13b', 13c', 13e', 13f', 13g' are formed as frame-like elements that surround the respective tooth on four sides (i.e. the buccal, mesial, lingual and distal surfaces) whilst leaving the occlusal surface of the tooth free. Anchoring elements 13d' and 13h' are semi-annular structures which surround the tooth to which they respectively anchor on three surfaces (here the buccal, lingual and distal surface are at least substantially surrounded by the anchoring elements 13b' and 13h'). The mesial and occlusal surfaces of the respective teeth are left free.

In some case, the first and second lugs 30a; 30b are the same size compared to each other. Alternatively, the first and second lugs 30a; 30b could be different in size to one another.

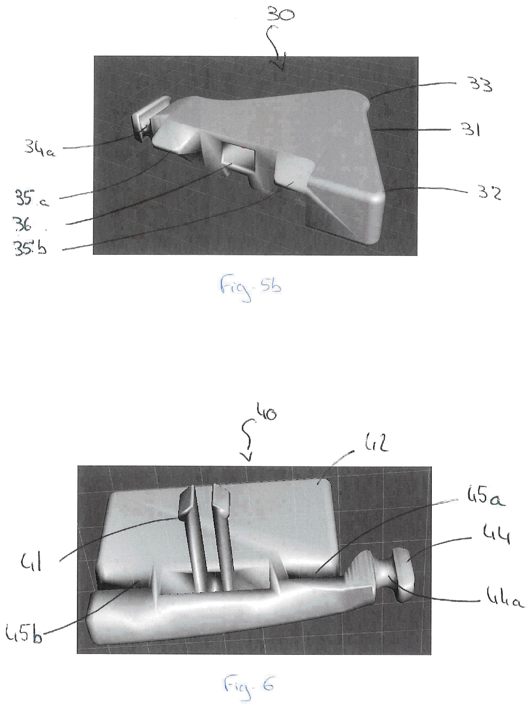

Fig. 5a shows a side view and Fig. 5b shows a bottom view of an embodiment of a lug 30 which is couplable to at least one of the first support 11 or second support 12 of an appliance 10. Here, the lug 30 is aliform (i.e. wing shaped) and comprises a top section 33 distanced vertically from a base section 32 of the lug 30. The top section 33 and the base section 32 are connected to one another on a first side of the lug 30 by a ramp surface 31. The ramp surface 31 forms a slideway on which a sliding surface 20 of the appliance 10 can slidingly translate. The lug 30 comprises a first interlocking protrusion 35a and a second interlocking protrusion 35b which are configured to respectively interlock with corresponding interlocking recesses 45a, 45b of a platform (see Fig. 6). The lug 30 further comprises an opening 36 though which snap-fit component 41 of a platform (see Fig. 6) may be inserted so as to couple to a corresponding snap-fit component (not shown) within the lug 30. The snap-fit component of the lug 30 comprises a recess which corresponds to the shape of a protrusion of the snap-fit component 41 of the platform.

The opening 36 further serves as an access point which allows the insertion of a tool within the lug 30 such that the lug 30 can be decoupled from the platform 40, for example so that it can be replaced by another lug 30.

The lug 30 shown in Fig. 5a-b further comprise a tab 34 which is configured to be positioned adjacent to a corresponding tab 44 of a platform 40 (see Fig. 6) when the platform 40 and lug 30 are coupled to one another. The tab 34 has a groove 34a separating the tab 34 from the lug body 30.

Fig. 6 shows an embodiment of a platform of an appliance 10. The platform has a plate 42. The plate 42 comprises a projection 41 which is a first component of a detachable connection and is configured to be coupled to a corresponding second component (not shown) of the detachable connection housed within the lug 30. The platform comprises a first recess 45a and a second recess 45b which are configured to interlinkingly couple to a first interlocking protrusion 35a and second interlocking protrusion 35b of the lug 30. Preferably the interlocking projections 35a; 35b of the lug 30 and the interlocking recesses 45a; 45b interlock in a sliding manner and are designed such that the recesses have a shape which is complementary to the protrusions 35a; 35b. The interlocking connection between the lug 30 and the platform 40 could be for example a swallowtail joint.

The platform 40 shown in Fig. 6, further has a tab 44 which is configured to be positioned adjacent to a corresponding tab 34 of a lug 30 (see Fig. 5a-b) when the platform 40 and lug 30 are couple to one another. The tab 44 has a groove 44a separating the tab 44 from the platform body 40. When coupled together, the groove 44a of the platform and the groove 34a of the lug form a somewhat continuous groove around the coupled platform 40 and lug 30 between the tabs 34, 44 and the platform body 40 and the lug body 34.

The continuous groove, formed by the groove 44a of the platform and the grove 34a of the lug, may accommodate a rubber band so as to secure the lug 30 and the platform 40 to one another. This can help avoid the aspiration of the lug by the patient in case the lug inadvertently decouples from the platform.

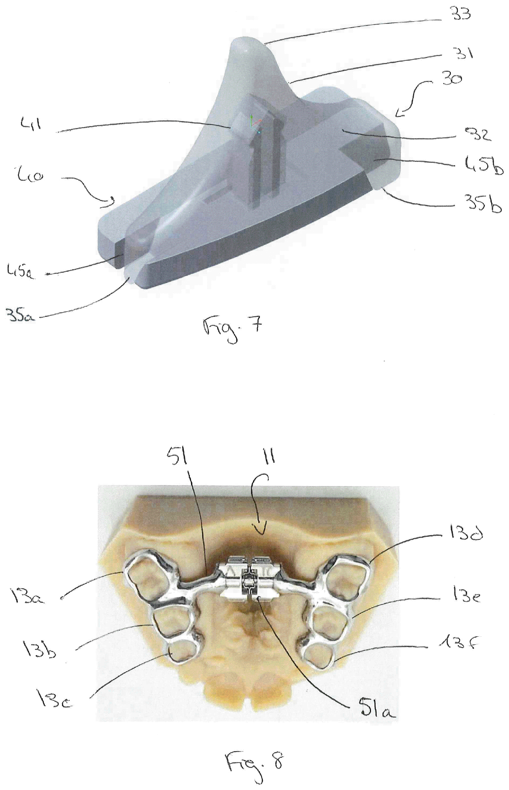

Fig. 7 shows a see-though view of the lug 30 coupled to the platform 40.

The lug 30 has been coupled to the platform 40 by a snap-fit connection 41 which has been inserted within the lug 30. Additionally, the lug 30 is further coupled to the platform 40 via the interlocking protrusions 35a; 35b of the lug 30 and the interlocking recesses 45a; 45b of the platform 40.

Fig. 8 shows a first support 11 which comprises a transverse bar 51 for the correction of a crossbite. The first support 11 comprises six anchoring elements 13a; 13b; 13c; 13b; 13e; 13f. The anchoring elements 13a; 13b; 13c; 13d; 13e; 13f are formed as frame-like elements that surround the respective tooth on four sides (i.e. the buccal, mesial, lingual and distal surfaces) whilst the occlusal surface of the tooth is left free.

The transverse bar 51 comprises a palatal expander 51a which is configured to a apply lateral outward pressure to both sides of the jaw relative to the median plane, expanding the jaw symmetrically.

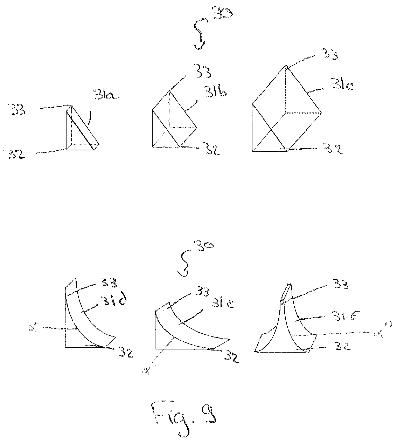

Fig. 9 shows a plurality of exemplary lugs 30 which can be provide in the kit. The six lugs 30 are each different in size and shape. Three of the lugs 30 which can be seen each have a straight ramp surface 31a; 31b; 31c. The straight ramp surfaces 31a; 31b; 31c each have a different width compared to one another. As an example, the ramp surfaces preferably have a width comprised between 0.1 mm to 10 mm. More preferably they have widths of between 0.5 mm to 5 mm. In cases where the ramp surface is detachable, the ramp surface has a width that is at least a width sufficient to carry a connection element to allow coupling to lug. The other three lugs 30 which can be seen each have a curved ramp surface 31d; 31e; 31f. The lugs 30 with the curved ramp surfaces 31d; 31e; 31f can be seen to have different heights from one another. The heights of the lugs 30 may comprised between 1 mm to 30 mm. Preferably, the lugs have a height comprised between 5 mm to 20 mm. As an example, a first lug could have a height of 5 mm, a second lug could have a height of 10 mm, a third lug a height of 15 mm and a fourth lug a height of 20 mm. Furthermore, the thickness of the top sections 31 and base sections of these lugs is also different one from another. The thickness of the base section can be comprised between 0.1 mm to 10 mm, 0.1 mm to 5 mm, 0.1 mm to 3 mm. The thickness of the top section can be comprised between 0.1 mm to 10 mm, 0.1 mm to 5 mm, 0.1 mm to 3 mm, 0.1 mm to 1 mm.

For instance, a first lug can have a base section of 5 mm thick and a top section of 1 mm thick. A second lug can have a base section of 5 mm thick and a top section of 1.5 mm thick. A third lug can have a base section of 5 mm thick and a top section of 2 mm thick. As can be seen the ramp surfaces have different angles α; α'; α'' from to each other and with respect to a platform.

## Claims

1. An orthodontic appliance (10) for correction of malocclusion in a patient, the appliance (10) comprising:
- A first support (11) configured to anchor to a first jaw, and
- a second support (12) configured to anchor to a second jaw,
at least one of the first support (11) or the second support (12) comprising a sliding surface (20), and
wherein the appliance further comprises a counter element (30) coupled to, or couplable to, the other of the first support (11) or the second support (12) such that it is positioned opposite the sliding surface (20), the counter element (30) having at least one ramp surface (31) forming a slideway for the sliding surface (20).

2. The orthodontic appliance according to any claim 1 or 2, wherein at least one of the first support (11) or second support (12) has at least one anchor element (13) which is configured to anchor the first support (11) or the second support (12) to the crown of at least one tooth in such a manner that the occlusal surface of the tooth is free.

3. The orthodontic appliance (10) according to claim 1 or 2, further comprising a second counter element (30) coupled to one of the first support (11) or the second support (12) such that, the second counter element (30) is opposite a second sliding surface (20), preferably the first sliding surface and the second sliding surface being studs, of the first support (11) or of the second support (12) with respect to a transversal plane.

4. The orthodontic appliance (10) according to any claim 1 to 3, wherein the counter element, preferably a lug (30), has a thickness between 0.1 mm to 10 mm, preferably between 0.1 mm to 5 mm

5. The orthodontic appliance (10) according to any claim 1 to 4, wherein at least one of the first support (11) or the second support (12) comprises at least one platform (40) configured to couple to the lug (30) via a decouplable connection (41).

6. The orthodontic appliance (10) according to claim 5,
wherein the lug (30) has a top section (33) having a top section thickness and a base section (32) having a base section thickness, the base section (32) being configured to couple to the at least one platform (40) and further wherein the top section thickness is different to, preferably smaller than, the base section thickness.

7. The orthodontic appliance (10) according to any of claims 1 to 6, wherein the at least one ramp surface (31) of the at least one counter element (30) is curved or straight.

8. The orthodontic appliance (10) according to any claim 6 or 7, wherein the at least one straight ramp surface (31) of the at least one lug (30) has an angle of 25° to 110° with respect to the platform.

9. The orthodontic appliance (10) according to any claim 1 to 8, wherein one or more of the ramp surface (31) of the counter element (30) or the sliding surface (20) is detachable.

10. The orthodontic appliance according to any claim 1 to 10, wherein at least one of the first support (11) or the second support (12) has a transverse bar, preferably an adjustable transverse bar, for correction of a cross-bite in a patient.

11. The orthodontic appliance according to claim 10, wherein the platform has a width comprised between 0.5 mm to 15 mm

12. Orthodontic kit comprising the appliance according to any of claims 1 to 11 or 16 to 19, the kit further comprising a plurality of lugs (30) and wherein at least two lugs (30) have a different size compared to each other.

13. Kit according to claim 12, wherein at least three lugs (30) have one or more of a different base section thickness, a different top section thickness, or a different height compared to each another.

14. Kit according to any of claims 12 or 13, wherein the ramp surface (31) of at least one lug (30) has a first curvature and the ramp surface (31) of at least a second lug (30) has a second curvature, the first curvature and second curvature being different from one another.

15. Kit according to any of claims 12 or 13, wherein the ramp surface (31) of at least one lug (30) has an angle (α) and the ramp surface (31) of at least a second lug (30) has an angle (α'), the angle (α) and angle (α') being different from one another.

16. The orthodontic appliance (10) according to any one of claims 2 to 11, wherein the anchor element includes a bracket (13) and/or a frame-like element.

17. The orthodontic appliance (10) according to any one of claims 5 to 11, wherein the decouplable connection (41) is any one or more of a snap-fit connection; or a magnetic connection, screw connection

18. The orthodontic appliance according to any one of claims 5 to 11, wherein the platform couples to the lug via an interlocking connection.

19. An orthodontic appliance (10) according to any claim 1 to 11, wherein at least one of the parts of the appliance (10) is produced by additive manufacturing.
